# EUROPÄISCHE PATENTSCHRIFT

(11) **EP 0 492 213 B1**
(45) Veröffentlichungstag und Bekanntmachung des Hinweises auf die Patenterteilung: **05.07.1995**
(21) Anmeldenummer: 91120947.6
(22) Anmeldetag: 06.12.1991
(51) Int. Cl.: G03B 21/132

(54) **Arbeitsprojektor**
Overhead projector
Rétro-Projecteur

(30) Priorität: 24.12.1990 DE 4041778
(43) Veröffentlichungstag der Anmeldung: 01.07.1992
(73) Patentinhaber: GEHA-WERKE GmbH, D-30001 Hannover (DE)
(72) Erfinder: Strohmeyer, Willi, W-3000 Hannover 91 (DE)
(74) Vertreter: Braun, Dieter, Dipl.-Ing. Patentanwälte, Hagemann & Kehl

(56) Entgegenhaltungen:
- DE-A- 3 205 643
- DE-A- 3 519 506
- US-A- 3 711 194

## Beschreibung

Die Erfindung bezieht sich auf einen Arbeitsprojektor, nach dem Oberbegriff des Anspruchs 1.

Mittels Arbeitsprojektoren der genannten Gattung ist es möglich, auf Projektionsfolien aufgebrachte Informationen auf eine Projektionsfläche zu projizieren. Eingesetzt werden derartige Arbeitsprojektoren beispielsweise in Konferenzräumen oder Schulen. Als nachteilig hat es sich hier herausgestellt, daß die Säule mit dem Projektionskopf ständig aus dem Geratekörper des Arbeitsprojektors herausragt und zumindest teilweise den Konferenzteilnehmern bzw. Schülern die Sicht auf den Vortragenden bzw. z. B. eine Wandtafel versperrt. Dies gilt sowohl für den Fall, daß der Arbeitsprojektor auf einem Projektionstisch abgestellt ist als auch für den Fall, daß der Gerätekörper des Arbeitsprojektors in dem Projektionstisch versenkt ist. Im letzteren Fall ist es besonders störend, daß die Säule mit dem Projektionskopf ständig aus der sonst ebenen Tischplatte hervorsteht.

Aus den genannten Gründen sind bereits Arbeitsprojektoren der genannten Gattung bekanntgeworden, bei denen die Säule mit dem Projektionskopf aus dem Gerätekörper herausgezogen und abgelegt werden kann. Nachteilig ist es, daß für die Säule mit dem Projektionskopf eine Ablagefläche bzw. nach Möglichkeit ein Schrankfach bereitgehalten werden muß. Dieses ist für den Bediener lästig, so daß die Praxis gezeigt hat, daß die Säule in der Regel überhaupt nicht vom Gerätekörper entfernt wird.

Durch die DE-C 36 38 157 ist es beispielsweise auch bereits bekanntgeworden, die Säule eines Arbeitsprojektors als Klapparm auszubilden. Hier gestattet es die spezielle Gestaltung der Säule, den Projektionskopf auf sehr einfache Art und Weise auf die Arbeitsfläche des Arbeitsprojektors zu klappen. Die beschriebenen Nachteile des Standes der Technik treten hier folglich nicht mehr auf. Die beschriebene Lösung ist jedoch relativ aufwendig und erfüllt in erster Linie die Aufgabe, bei einem transportablen, sehr flach ausgebildeten Arbeitsprojektor nach dem Reflektionsprinzip das Transportieren in einem Transportkoffer zu ermöglichen. Aus der DE-A-32 05 643 ist ein Arbeitsprojektor mit einer teleskopierbaren Säule mit einer darin zum Gewichtsausgleich angeordneten Druckfeder bekannt. Zum Transport muß bei dem bekannten Projektor die Säule jedoch umgeklappt werden.

Der Erfindung liegt die Aufgabe zugrunde, bei einem Arbeitsprojektor mit einem Gerätekörper, in der die Beleuchtungseinrichtung angeordnet ist, eine einfach gestaltete und einfach zu bedienende Lösung zu finden, die es vermeidet, daß die Säule mit dem Projektionskopf auch bei außer Betrieb befindlichem Arbeitsprojektor aus dessen Arbeitsfläche hervorsteht.

Diese Aufgabe wird erfindungsgemäß durch die Merkmale des Anspruchs 1 gelöst. Dadurch, daß die den Projektionskopf tragende Säule als Teleskopsäule ausgebildet ist, die im wesentlichen im Gerätekörper versenkbar ist, wird auf sehr einfache Art und Weise ein Versenken der Säule in einen an sich freien Raum des Gerätekörpers ermöglicht. Da an der Säule zwei Druckfedern mit nach oben gerichteter Federkraft angeordnet ist, ist es möglich, das Eigengewicht der Säule und das Gewicht des Vergrößerungskopfes zu kompensieren. Die Federkraft der Druckfedern bewirkt, daß nach Lösen eines Feststellgliedes zum Arretieren der Säule diese nach oben in die Projektionsstellung bewegt wird. Dieses gilt dann, sofern die Federkraft der zwei Druckfedern größer ist als die an der Säule aufgrund des Gewichtes der Säule und des Projektionskopfes wirksame Kraft.

Sofern die Federkraft schwächer ausgelegt wird, ist zumindest erreichbar, daß die Federkraft das Herausziehen der Säule aus dem Gerätekörper erleichtert. Indem Druckfedern der Teleskopsäule als Gasdruckfeder ausgebildet ist, wird erreicht, daß die Teleskopsäule nach Lösen des Feststellgliedes langsam nach oben bewegt wird. Die Gasdruckfedern verhindern aufgrund ihrer Dämpfungseigenschaft ein schlagartiges Emporschnellen der Teleskopsäule. Dieses ist insbesondere dann von Bedeutung, sofern die Federkraft der Druckfedern deutlich größer ist als die aufgrund des Gewichtes der Säule und des Projektionskopfes wirksamen Kraft.

Erfindungsgemäß sind in der Teleskopsäule zwei Druckfedern bzw. Gasdruckfedern in Reihe angeordnet, die sich mit jeweils einem Ende an einem in der Säule verschiebbaren Stützkörper abstützen. Hierdurch wird bei eingefahrener Teleskopsäule eine im Verhältnis zum Federweg kleine Bauhöhe der Federkombination erreicht. Außerdem ergibt sich ein kleinerer Gesamtdurchmesser, der es ermöglicht, die Teleskopsäule trotz der integrierten Federn schlank zu halten. Im übrigen können relativ kurze, kostengünstige Gasdruckfedern eingesetzt werden. Beim Einsatz einfacher Druckfedern ergibt sich aus der erfindungsgemäßen Anordnung. von zwei Federn in Reihe der Vorteil eines günstigen Verlaufs der Federkennlinien. Die kleinen Federwege halten den Kraftanstieg beim Einschieben der Teleskopsäule in vertretbaren Grenzen. Die erfindungsgemäße Wirkung ergibt sich dadurch, daß die Druckfeder des unteren Segmentes der Teleskopsäule am Boden des Gerätekörpers und an dem Stützkörper befestigt ist, und daß die Druckfeder des oberen Segmentes der Teleskopsäule am Stützkörper und am oberen Ende dieses Segmentes befestigt ist.

Das Feststellglied ist in sehr einfacher Art und Weise als Rasthebel mit einer Handhabe ausgebildet. Das Feststellglied ist im übrigen an der Oberseite der Teleskopsäule angeordnet und um einen Drehpunkt verschwenkbar. Weiterhin ist eine Raste angeordnet, die bei in den Gerätekörper eingefahrener Teleskopsäure in eine am Gerätekörper angeordnete Rastausnehmung eingreifen kann. Durch eine einfache Betätigung der Handhabe des Feststellgliedes wird die Raste gelöst und die Teleskopsäule mit dem Projektionskopf bewegt sich unter dem Einfluß der Kraft der Druckfeder bzw. Gasdruckfeder nach oben in die Projektionsstellung.

Die vorliegende Lösung zeichnet sich durch eine große Bedienerfreundlichkeit aus und ist mit relativ einfachen Mitteln realisierbar. Ein weiterer Vorteil ergibt sich daraus, daß die Säule und der Projektionskopf fest mit dem Gerätekörper verbunden sind, so daß ein Abhandenkommen z. B. auch durch Diebstahl ausgeschlossen ist.

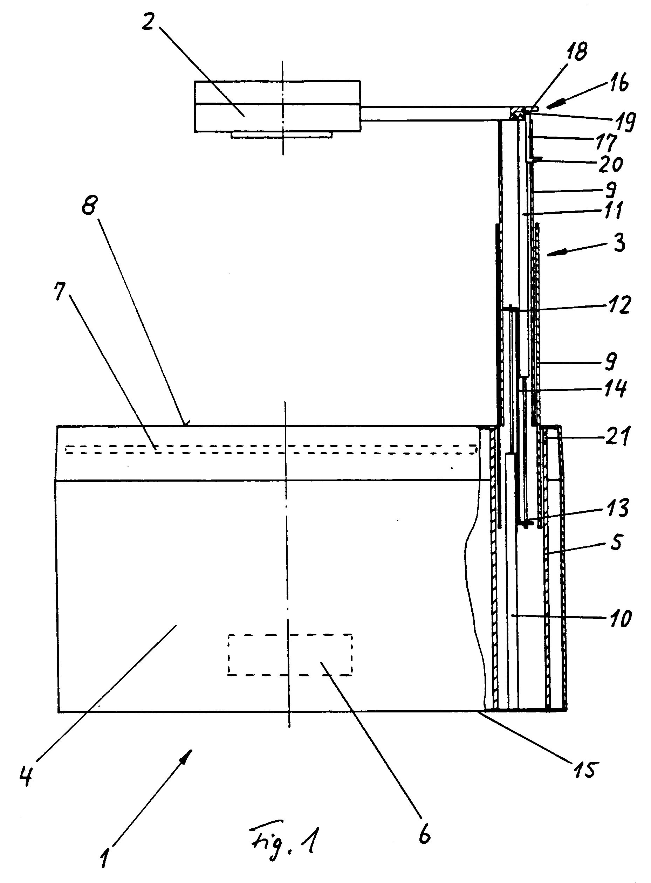

In der Zeichnung ist ein Ausführungsbeispiel der Erfindung dargestellt. Es zeigen:
Figur 1
   eine Seitenansicht eines Arbeitsprojektors in der Projektionsstellung des Projektionskopfes, die im Bereich der Teleskopsäule geschnitten ist,
Figur 2
   eine Seitenansicht des Arbeitsprojektors gemäß Figur 1 in der Ruhestellung des Projektionskopfes.

In der Zeichnung ist mit 1 ein Arbeitsprojektor bezeichnet, dessen Projektionskopf an eine als Teleskopsäule ausgebildeten Säule 3 angeordnet ist. Die Säule 3 des Arbeitsprojektors 1 ist an einem Gerätekörper 4 des Arbeitsprojektors 1 befestigt und in einem Schacht 5 des Gerätekörpers 4 geführt.

Im Gerätekörper 4 sind eine Beleuchtungseinrichtung 6 und eine Fresnell-Linse 7 angeordnet. An der Oberseite des Gerätekörpers 4 befindet sich eine Arbeitsfläche 8, die an sich bekannter Art und Weise von einer Glasplatte gebildet ist. Auf der Glasplatte 8 werden bei der Arbeit mit dem Arbeitsprojektor 1 die zu beschriftenden bzw. die zu projizierenden Informationen bereits enthaltenden Transparente abgelegt und zur Projektion durchleuchtet.

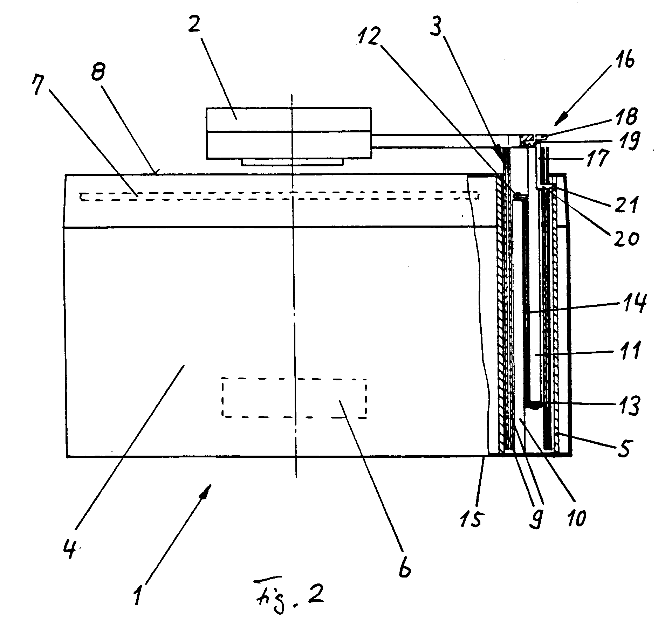

Die als Teleskopsäule ausgebildete Säule 3 ist von ineinander verschiebbaren Segmenten 9 gebildet und, wie aus Figur 2 ersichtlich, im wesentlichem im Schacht 5 des Gerätekörpers 4 versenkbar. In den Segmenten 9 der Säule 3 sind zwei als Gasdruckfedern ausgebildete Druckfedern 10 und 11 angeordnet. Die Druckfedern 10, 11 stützen sich mit jeweils einem Ende 12 bzw. 13 an einen in der Säule 3 verschiebbaren Stützkörper 14 ab. Die Druckfeder 10 des unteren Segmentes 9 der Säule 3 ist am Boden 15 des Gerätekörpers 4 und am Stützkörper 14 befestigt. Die Druckfeder 11 des oberen Segmentes 9 der Säule 3 ist am Stützkörper 14 und am oberen Ende dieses Segmentes 9 befestigt.

An der Oberseite der als Teleskopsäule ausgebildeten Säule 3 ist ein Feststellglied 16 angeordnet. Das Feststellglied 16 ist als Rasthebel 17 mit einer Handhabe 18 ausgebildet. Der Rasthebel 17 ist um einen Drehpunkt 19 verschwenkbar, und es ist eine Raste 20 angeordnet, die in eine am Gerätekörper 4 angeordnete Rastausnehmung 21 eingreifen kann.

In der Figur 2 der Zeichnung ist der Arbeitsprojektor 1 in seiner Ruhestellung dargestellt. Hier greift die Raste 20 des Feststellgliedes 16 in die Rastausnehmung des Gerätekörpers 4 ein. Das Feststellglied 16 hält die als Teleskopsäule ausgebildete Säule 3 in ihre Ruhestellung, d. h. in der in den Schacht 5 des Gerätekörpers 4 eingeschobenen Stellung. Der an der Säule 3 angeordnete Projektionskopf 2 befindet sich in unmittelbarer Nahe der Arbeitsfläche 8. Es ragen somit keine Bauteile des Arbeitsprojektors 1 wesentlich über die Arbeitsfläche 8 hinaus, so daß eine Beeinträchtigung der Sichtverhältnisse im Vortragsraum nicht eintreten kann. Außerdem ist das nach unten geöffnete Objektiv vor Berührungen, die zu Verschmutzungen führen könnten, geschützt.

Sofern das Feststellglied 16 an seine Handhabe 18 betätigt wird, verschwenkt der Rasthebel 17 um seinen Drehpunkt 9, so daß die Raste 20 aus der Rastausnehmung 21 des Gerätekörpers 4 austritt. Als Folge davon werden die Kräfte der als Gasdruckfedern ausgebildeten Druckfedern 10 und 11 wirksam. Die Druckfedern 10 und 11 schieben, über den Stützkörper 14 miteinander verbunden, die Segmente 9 der Säule 3 mit dem Projektionskopf 2 nach oben in die in der Figur 1 dargestellte Projektionsstellung. In der in der Figur 1 dargestellten Position befinden sich die Segmente 9 der Säule 3 in der durch nicht dargestellte Anschläge vorgegebenen Endstellung. Die als Gasdruckfedern ausgebildeten Druckfedern 10 und 11 bewirken, daß die Segmente 9 der Säule 3 in einer gedämpften Bewegung nach oben geschoben werden. Es ist somit sichergestellt, daß keine schlagartige Beanspruchung auftritt.

Nach der Beendigung der Arbeit mit dem Arbeitsprojektor 1 kann die Säule 3 durch einfaches Niederdrücken in ihre Ruhestellung im Schacht 5 des Gerätekörpers 4 gebracht werden. Im übrigen ist es durch eine Anordnung weiterer Feststellglieder 16 bzw. Rastausnehmungen 21 möglich, die als Teleskopsäule ausgebildete Säule 3 auch in Zwischenstellungen zu arretieren. Es ist somit möglich, eine Focussierung des Objektives des Projektionskopfes 2 in der Form vorzunehmen, daß beispielsweise Ausschnittsvergrößerungen des Informationsgehaltes der auf der Arbeitsfläche 8 abgelegten Transparentfolie vorgenommen werden können. Hierzu ist es dann lediglich erforderlich, dem Objektiv des Projektionskopfes 2 eine Zusatzoptik vorzuschalten. Dsgl. ist der Einsatz einer Vario-Optik möglich.

## Patentansprüche

1. Arbeitsprojektor mit einer einen Projektionskopf (2) tragenden Säule (3), die als von ineinander verschiebbaren Segmenten (9) gebildete Teleskopsäule mit einer integrierten Druckfeder (10, 11) ausgebildet ist, deren Federkraft dem Gewicht des Projektionskopfes (2) entgegengerichtet ist und an der ein Feststellglied (16) zum Arretieren der Säule (3) angeordnet ist, **dadurch gekennzeichnet**, daß in der Säule (3) zwei Druckfedern (10, 11) angeordnet sind, die sich mit jeweils einem Ende (12, 13) an einem innerhalb der Säule (3) verschiebbar angeordneten Stützkörper (14) abstützen.

2. Arbeitsprojektor nach Anspruch 1, dadurch gekennzeichnet, daß die eine Druckfeder (10) am Stützkörper (14) und am Boden (15) eines Gerätekörpers (4) und die andere Druckfeder (11) am Stützkörper (14) und am oberen Segment (9) angreift.

3. Arbeitsprojektor nach Anspruch 1 und gegebenenfalls Anspruch 2, dadurch gekennzeichnet, daß die Säule (3) in der Transportstellung im wesentlichen in dem Gerätekörper (4) versenkbar ist.

4. Arbeitsprojektor nach Anspruch 1 und gegebenenfalls einem oder mehreren der weiteren Ansprüche, dadurch gekennzeichnet, daS das Feststellglied (16) an der Oberseite der Säule (3) angeordnet ist.

5. Arbeitsprojektor nach Anspruch 1 und gegebenenfalls Anspruch 2, dadurch gekennzeichnet, daß die Druckfedern (11) als Gasdruckfedern ausgebildet sind.

## Claims

1. An overhead projector comprising a column (3) supporting a projection head (2), the column being in the form of a telescopic column made up of segments or telescopic parts (9) which are movable into one another and incorporating a pressure spring (10, 11) the spring force of which counteracts the weight of the projection head (2), a locking element (16) for securing the column (3) being disposed on the latter, characterised in that two pressure springs (10, 11) are disposed in the column (3), with one end (12, 13) of each spring bearing against an abutment (14) movably disposed inside the column (3).

2. An overhead projector according to claim 1, characterised in that one pressure spring (10) engages the abutment (14) and the base (15) of a body (4) of the apparatus, and the other pressure spring (11) engages the abutment (14) and the upper segment or telescopic part (9).

3. An overhead projector according to claim 1 and, optionally, claim 2, characterised in that the column (3), when in the transport position, can be lowered substantially into the body (4).

4. An overhead projector according to claim 1 and, optionally, one or more of the other claims, characterised in that the locking element (16) is disposed on the top surface of the column (3).

5. An overhead projector according to claim 1 and, optionally, claim 2, characterised in that the pressure springs (11) are gas pressure springs.

## Revendications

1. Rétroprojecteur comportant une tête de projection (2) portée par une colonne télescopique (3) constituée de segments (9) coulissant l'un dans l'autre et contenant un ressort de poussée intégré (10, 11) dont la force s'oppose au poids de la tête de projection, la colonne étant équipée d'un organe de blocage (16) servant à l'arrêter, caractérisé en ce que la colonne (3) contient deux ressorts de poussée (10, 11) dont chacun est en appui, par une de ses extrémités (12, 13), sur une entretoise d'appui (14) pouvant coulisser à l'intérieur de la colonne (3).

2. Rétroprojecteur selon la revendication 1, caractérisé en ce qu'un ressort de poussée (10) est en appui sur l'entretoise (14) et sur le fond (15) du corps (4) de l'appareil tandis que l'autre ressort (11) est en appui sur l'entretoise (14) et sur le segment supérieur (9).

3. Rétroprojecteur selon la revendication 1 et la revendication 2, caractérisé en ce que la colonne (3) peut, en position de transport, être en majeure partie enfoncée dans le corps (4) de l'appareil.

4. Rétroprojecteur selon la revendication 1 et éventuellement l'une ou plusieurs des autres revendications, caractérisé en ce que l'organe de blocage (16) est monté à la partie supérieure de la colonne (3).

5. Rétroprojecteur selon la revendication 1 et éventuellement la revendication 2, caractérisé en ce que les ressorts de poussée (11) sont des ressorts à gaz.
